# EUROPÄISCHE PATENTSCHRIFT

(11) **EP 2 342 640 B1**
(45) Veröffentlichungstag und Bekanntmachung des Hinweises auf die Patenterteilung: **14.12.2016**
(21) Anmeldenummer: 09744130.7
(22) Anmeldetag: 27.10.2009
(51) Int. Cl.: G06F 12/02, G06F 3/06, G06F 12/14

(54) **SPEICHERMEDIUM MIT UNTERSCHIEDLICHEN ZUGRIFFSMÖGLICHKEITEN**
STORAGE MEDIUM WITH DIFFERENT ACCESS OPTIONS
SUPPORT DE MÉMOIRE PRÉSENTANT DIFFÉRENTES POSSIBILITÉS D'ACCÈS

(30) Priorität: 28.10.2008 DE 102008053581; 13.07.2009 DE 102009032821
(43) Veröffentlichungstag der Anmeldung: 13.07.2011
(73) Patentinhaber: Giesecke & Devrient GmbH, 81677 München (DE)
(72) Erfinder: BARTSCH, Armin, 86899 Landsberg a. Lech (DE)
(86) Internationale Anmeldenummer: PCT/EP2009/064135
(87) Internationale Veröffentlichungsnummer: WO 2010/049413

(56) Entgegenhaltungen:
- EP-A1- 1 577 780
- WO-A2-2008/058705
- DE-A1-102007 050 463
- US-A1- 2007 094 470
- US-A1- 2008 229 090

## Beschreibung

Die Erfindung betrifft ein tragbares Speichermedium mit einem Speicherbereich und einem Speicherverwaltungssystem zur Verwaltung des Speicherbereichs, bei dem unterschiedliche Zugriffsmöglichkeiten auf den Speicherbereich vorgesehen sind. Eine derartige Lösung ist beispielsweise aus WO 2008/058705 bekannt.

Speichermedien im Sinn der Erfindung werden zum Bereithalten von unterschiedlichsten Daten verwendet, beispielsweise Applikationen für unterschiedliche Einsatzgebiete, oder auch Mediendaten wie Fotos oder Filme.
Das Speichermedium ist tragbar gestaltet und kann äußerlich als flache Karte oder alternativ als Token gestaltet sein.

Das Speichermedium hat einen Speicherbereich (Massenspeicher) und ein Speicherverwaltungssystem, z.B. einen Speichercontroller oder ein System von mehreren gekoppelten Speichercontrollern, durch die der Speicherbereich verwaltet wird. Im Speicherbereich sind die Daten abgespeichert. Der Speicherbereich kann in Teilspeicherbereiche strukturiert sein. Das Speicherverwaltungssystem stellt einen Kommandosatz zur Verfügung, der eine Mehrzahl von vordefinierten Kommandos enthält, mit denen sich die Aufgaben der Speicherverwaltung durchführen lassen, wie beispielsweise das Lesen (READ) oder das Schreiben (WRITE) im Speicherbereich, das Öffnen von Speicherteilen (OPEN) oder das Setzen und Aufheben von Schreibschutz für den Speicherbereich. Manche Kommandos sind durch das Speicherverwaltungssystem als freigehaltene Kommandos unbelegt gehalten, für eventuelle später einzurichtende Aufgaben der Speicherverwaltung.

Der Speicherbereich kann prinzipiell in jeder geeigneten - vorzugsweise elektrischen - Speichertechnologie verwirklicht sein, insbesondere als Flash-Speicher, aber auch als RAM, ROM oder EEPROM.

Konkrete Kommandos sind beispielsweise in unterschiedlichen Schnittstellen-Standards (Interface-Standards) spezifiziert, denen das Speichermedium genügt. Beispiele für Schnittstellen-Standards für Speichermedien sind SD (Secure Digital Memory Card), MMC (Multi Media Card), USB (Universal Serial Bus), SCSI (Small Computer System Interface). Im Folgenden wird ein Speichermedium teils am Beispiel des Schnittstellen-Standards SD betrachtet. Analoges gilt für Speichermedien nach anderen Schnittstellen-Standards.

Speichermedien nach dem SD-Schnittstellen-Standard sind z.B. in "SD Specifications, Part 1, Physical Layer Specification" (http://www.sdcard:org) (im Folgenden "SD-Spec") beschrieben. Das SD-Speichermedium verfügt über einen Satz an vordefinierten Kommandos. Sie erlauben es dem Hersteller beispielsweise, Schreibschutzbits zu setzen (Kommandos CMD28, CMD29, CMD30), um Daten vor dem Löschen zu schützen. Mit dem Kommando CMD16 kann die SD-Speicherkarte mittels einer Kartensperre "card lock" durch einen Host gesperrt werden. Die Sperre lässt sich mit einem Passwort wieder aufheben. Ein mechanischer Schreibschutzschieber bietet eine weitere Möglichkeit, Daten vor dem Löschen zu Schützen.

Gemäß der SD-Spec sind manche Kommandos, z.B. CMD60 ff. freigehalten als sogenannte "herstellerspezifische Kommandos".

Häufig sind Kommandos aufgeteilt in einen Kommandotypteil, einen Argumentteil (teils auch Adressteil genannt) und einen Datenteil. Der Datenteil enthält einen Datenkörperteil (Body) und optional einen Leitinformationsteil (Header), der dem Datenkörperteil üblicherweise vorangestellt ist.

Bei einem herkömmlichen Kommando wie z.B. Schreiben ist der Kommandotyp "Schreiben" im Kommandotypteil implementiert, im Argumentteil (Adressteil) ist angegeben bei welcher logischen Adresse im Speicherbereich geschrieben werden soll, und im Datenteil, genauer im Datenkörperteil, ist angegeben, was geschrieben werden soll.

Wahlweise hat das Speichermedium einen Mikroprozessor, wobei die Aufgabe der Speicherverwaltung wahlweise vom Mikroprozessor durchgeführt wird. Beispiele solcher tragbarer Speichermedien sind mit einem Mikroprozessor ausgestattete Smart Cards und mit einem Speichercontroller ausgestattete Speicherkarten. Bei einem Einsatz des tragbaren Speichermediums im Mobilfunkbereich kann das tragbare Speichermedium beispielsweise als Smart Card mit einem Sicherheitsmodul zur Nutzung eines Endgeräts (z.B. Mobiltelefon) in einem Mobilfunknetz gestaltet sein oder in eine solche Smart Card integriert sein. Die Smart Card ist beispielsweise eine SIM-Karte für das GSM-System oder eine USIM-Karte für das UMTS-System oder eine ähnliche Smart Card. Wahlweise ist das tragbare Speichermedium als Pay TV Karte zur Nutzung von Bezahlfernsehen gestaltet oder in eine solche Pay TV Karte integriert. Wahlweise ist das tragbare Speichermedium eine Secure Flash Card mit integrierter Smart Card oder eine in eine Secure Flash Card integrierte Smart Card, wobei die Secure Flash Card als Speicherverwaltungssystem einen der Smart Card übergeordneten Flash-Controller hat.

Das tragbare Speichermedium lässt sich mittels eines Endgeräts auslesen und beschreiben. Als Endgerät ist beispielsweise ein PC (Personal Computer), ein mobiles Endgerät für ein Mobilfunknetz, z.B. ein Mobiltelefon, PDA, Smart Phone etc., oder eine Set Top Box für Bezahlfernsehen (Pay TV) vorgesehen. Bei einem tragbaren Speichermedium, das als Secure Flash Card oder als in eine Secure Flash Card integrierte Smart Card gestaltet ist, kann als Endgerät ein mobiles Endgerät wie z.B. Mobiltelefon, PDA oder Smart Phone etc. vorgesehen sein. Das Endgerät hat ein Betriebssystem, beispielsweise ein PC-Betriebssystem oder ein Betriebssystem für mobile Endgeräte wie beispielsweise Microsoft Windows, Microsoft Windows Mobile, Linux, Symbian oder dergleichen.

Gerade für Teilspeicherbereiche im Speicherbereich, in denen Applikationen abgespeichert sind, kann es wünschenswert sein, dass ein Nutzer des Speichermediums keine Veränderungen vornehmen kann, damit beispielsweise nicht versehentlich Applikationen gelöscht werden. Aber auch für andere Daten kann gewünscht sein, dass sie vor versehentlichem oder absichtlichem Löschen oder Verändern geschützt sind.

Viele Betriebssysteme von PCs ermöglichen das Anlegen unterschiedlicher Partitionen, um Speicherbereiche zu unterteilen und hierdurch gegen das Löschen von Daten geschützte Teilbereiche in Gestalt von geschützten Partitionen anzulegen. Bei vielen mobilen Endgeräten bietet das Betriebssystem nicht die Möglichkeit, Partitionen auf einem darin betriebenen Speichermedium anzulegen.

WO 2008/058741 beschreibt ein Verfahren zum Zugreifen auf ein Speichermedium mit einem Speicherbereich und einem Controller zur Verwaltung des Speicherbereichs, bei dem Datenzüge, die eine Leitinformation enthalten, an ein Zusatzmodul, beispielsweise einen besonders gesicherten Mikroprozessor oder Teilbereich des Controllers, geleitet werden.

Das Dokument WO 2008/058705, von dem als nächstliegender Stand der Technik ausgegangen wird, beschreibt ein Speichermedium mit einem Speicherbereich und einer Speicherverwaltung (Controller) zur Verwaltung des Speicherbereichs, bei dem unterschiedliche Zugriffsmöglichkeiten auf den Speicherbereich vorgesehen sind. Bei einem Zugriff auf den Speicherbereich über die Speicherverwaltung unter Angabe einer Adresse im Speicherbereich leitet die Speicherverwaltung, in Abhängigkeit vom Wert der Adresse, den Zugriff direkt an den Speicherbereich weiter oder an ein Zusatzmodul, das beispielsweise ein Smart Card Microcontroller ist. In Abhängigkeit von der beim Zugriff angegebenen Adresse werden so unterschiedliche Zugriffsmöglichkeiten vorgesehen.

Bei dem Speichermedium aus WO 2008/058705 führen die entsprechenden Adressen oder Adressbereiche zwangsweise zu einer Umleitung eines Zugriffs auf das Zusatzmodul.

Wünschenswert wäre in manchen Fällen eine flexiblere Gestaltung der Speicherverwaltung; die es beispielsweise erlaubt, Partitionen auf dem Speichermedium anzulegen, unabhängig vom Betriebssystem eines zum Lesen bzw. Schreiben des Speichermediums verwendeten Endgeräts, um auf diese Weise Daten gegen Löschen zu Schützen.

Herkömmlicherweise lässt sich mit einem Setzen (Einschalten) und Aufheben (Ausschalten) des Schreibschutzes mittels eines vordefinierten Kommandos, z.B. gemäß der SD-Spec, der Speicherbereich eines Speichermediums zwischen zwei unterschiedlichen Speicherkonfigurationen, nämlich "Schreiben erlaubt" und "Schreiben nicht erlaubt", schalten. Der Schreibschutz umfasst dabei den gesamten Speicherbereich oder ggf. Teilbereiche, falls das Betriebssystem des Endgeräts, in dem das Speichermedium betrieben wird, eine Partitionierung des Speicherbereichs unterstützt.

EP 1577 780 A1 offenbart ein Speichermedium mit einem sicheren Teilspeicherbereich, einem nur nach einer Authentisierung zugänglichen Teilspeicherbereich und einen auch ohne Authentisierung zugänglichen Teilspeicherbereich. Abhängig von einem zum Zugriff auf das Speichermedium verwendeten Kommando wird auf einen dem Kommando entsprechenden Teilspeicherbereich zugegriffen.

US 2007/0094470 A1 zeigt eine Technik zum Schreiben von Daten in geschützte Bereiche eines Speichermediums. Das Speichermedium ist in logische Blöcke von je beispielsweise 512 Byte organisiert. Für jeden logischen Block kann mittels eines Moduswechselbefehls zwischen diversen unterschiedlichen Schutzstufen (ungeschützt, nur-Lesen, WORM, ...) hin- und hergeschaltet werden.

US 2008/0229090 A1 offenbart eine Speicherkarte mit einem Benutzerbereich und einem Boot-Bereich. Die beiden Bereiche können die gleichen logischen Adressen, aber unterschiedliche physikalische Adressen aufweisen. Während eines Boot-Vorgangs erfolgt ein Zugriff auf den Boot-Bereich. Nach Abschluss des Boot-Vorgangs kann durch einen Moduswechselbefehl "CMD6" zwischen einem normalen Betriebsmodus und einem Boot-Betriebsmodus hin- und hergeschaltet werden. Im Boot-Modus greifen Lese- und Schreibkommandos auf den Boot-Bereich zu, während sie im normalen Modus auf den Benutzerbereich zugreifen.

Der Erfindung liegt die Aufgabe zu Grunde, ein Speichermedium mit einem Speicherbereich und einer Speicherverwaltung zur Verwaltung des Speicherbereichs zu schaffen, bei welchem Speichermedium auf flexible Weise und unabhängig von einem zum Betrieb des Speichermediums verwendeten Endgerät unterschiedliche Möglichkeiten des Zugriffs auf den Speicherbereich vorgesehen sind, insbesondere um Daten gegen Löschen zu schützen.

Die Aufgabe wird gelöst durch einen Speichermedium nach Anspruch 1. Vorteilhafte Ausgestaltungen der Erfindung sind in den abhängigen Ansprüchen angegeben.

Das erfindungsgemäße Speichermedium nach Anspruch 1 hat einen Speicherbereich und ein Speicherverwaltungssystem zur Verwaltung des Speicherbereichs. Bei dem Speichermedium sind unterschiedliche Zugriffsmöglichkeiten des Zugreifens auf den Speicherbereich vorgesehen. Die Erfindung zeichnet sich dadurch aus, dass das Speicherverwaltungssystem ein Konfigurationskommando umfasst, dessen Ausführung ein Aktivieren einer einzelnen von mindestens zwei unterschiedlichen aktivierbaren Speicherkonfigurationen bewirkt. Die unterschiedlichen Speicherkonfigurationen unterscheiden sich dadurch, dass mindestens ein Zugriffskommando zum Zugreifen auf den Speicherbereich abhängig von der aktivierten Speicherkonfiguration in einen unterschiedlichen Teilspeicherbereich geleitet wird.

Mit der Erfindung lässt sich die Speicherkonfiguration des Speichermediums einstellen oder verändern, indem sich wahlweise eine von mehreren aktivierbaren Speicherkonfigurationen aktivieren lässt. Auf einmal kann jeweils nur eine einzige Speicherkonfiguration aktiviert sein. Die anderen Speicherkonfigurationen (eine oder mehrere) sind dabei inaktiv. Um die Aktivierung zu bewirken, wird das Konfigurationskommando aufgerufen und ausgeführt, ggf. zusammen mit einem (oder mehreren) Parameter(n), der angibt, welche der Speicherkonfigurationen aktiviert werden soll. Das Konfigurationskommando ist so konfiguriert und ggf. parametrisiert, dass die aktivierbaren Speicherkonfigurationen vorgegebenen Wünschen und Anforderungen z.B. des Herstellers oder Herausgebers des Speichermediums entsprechen, was ein hohes Maß an Flexibilität bietet. Beispielsweise lässt sich das Konfigurationskommando so konfigurieren, dass bei einer der aktivierbaren Speicherkonfigurationen physikalische Teilbereiche des Speicherbereichs komplett ausgeblendet sind, also nicht adressierbar sind, oder/und für das Schreiben ausgeblendet sind, und dadurch vor einem Löschen geschützt sind. Dadurch, dass das Konfigurationskommando in dem Speichermedium selbst implementiert ist, sind zudem die unterschiedlichen Speicherkonfigurationen unabhängig von einem zum Betrieb des Speichermediums verwendeten Endgerät einstellbar.

Insbesondere können beispielsweise unterschiedliche Partitionen im Speicherbereich verwirklicht werden, wobei jeder Teilspeicherbereich einer Partition entspricht. Jede aktivierbare Speicherkonfiguration entspricht dann einem Teilspeicherbereich bzw. einer Partition.

Daher ist gemäß Anspruch 1 ein Speichermedium mit einem Speicherbereich und einer Speicherverwaltung zur Verwaltung des Speicherbereichs geschaffen, bei welchem Speichermedium auf flexible Weise unterschiedliche Möglichkeiten des Zugriffs auf den Speicherbereich vorgesehen sind, unabhängig von einem zum Betrieb des Speichermediums verwendeten Endgerät.

Das Zugriffskommando ist beispielsweise ein Lesekommando zum Auslesen von Daten aus dem Speicherbereich oder ein Schreibkommando zum Schreiben von Daten in den Speicherbereich oder ein Löschkommando zum Löschen von Daten im Speicherbereich, oder ein Öffnen-Kommando.

Wahlweise sind mindestens zwei unterschiedliche Teilspeicherbereiche disjunkt. In diesem Fall sind insbesondere die entsprechenden Partitionen disjunkt. Alternativ können unterschiedliche Teilspeicherbereiche bzw. Partitionen überlappen.

Wahlweise umfasst ein Zugriffskommando eine Angabe einer logischen Adresse, und das Leiten in einen Teilspeicherbereich umfasst ein Übersetzen der logischen Adresse in eine physikalische Adresse des Speicherbereichs. In Abhängigkeit von der aktivierten Speicherkonfiguration wird eine der Speicherkonfiguration entsprechende Übersetzung von logischen Adressen in physikalische Adressen des Speicherbereichs vorgesehen. Für jede der aktivierbaren Speicherkonfigurationen wird eine Übersetzung von logischen Adressen in physikalische Adressen des Speicherbereichs vorgesehen, die sich von den Übersetzungen der anderen Speicherkonfigurationen zumindest für eine logische Adresse unterscheidet. Für Speicherkonfigurationen, die disjunkte Teilspeicherbereiche bzw. Partitionen vorsehen, wird ein logischer Adressbereich in Abhängigkeit von der aktivierten Speicherkonfiguration auf einen unterschiedlichen physikalischen Speicherbereich übersetzt; der mit den physikalischen Speicherbereichen der anderen Speicherkonfigurationen keinen Überlapp hat.

Wahlweise ist im Speichermedium mindestens eine Übersetzungs-Tabelle implementiert, durch die ein Übersetzen von logischen Adressen in physikalische Adressen durchführbar ist. Wahlweise ist für jede aktivierbare Speicherkonfiguration eine Übersetzungs-Tabelle im Speichermedium implementiert.

Wahlweise umfasst mindestens eine der unterschiedlichen Speicherkonfigurationen einen Schreibschutz für zumindest einen Unterbereich des Speicherbereichs. Dabei wird beispielsweise zumindest ein Unterbereich für zumindest ein Kommando, z.B. Schreiben WRITE, ausgeblendet.

Wahlweise ist das Speichermedium zum Verarbeiten von Kommandos eingerichtet, die zumindest einen Kommandotypteil aufweisen, wobei das Konfigurationskommando teilweise im Datenteil und teilweise im Kommandotypteil implementiert ist. Für ein im Kommandotypteil implementiertes Konfigurationskommando kann beispielsweise ein derzeit nicht belegtes herstellerspezifisches Kommando einer Spezifikation verwendet werden. In diesem Fall ist das Konfigurationskommando ähnlich konfigurierbar wie ein herkömmliches Kommando beispielsweise zum Lesen (READ) und Schreiben (WRITE), wobei im Kommandotypteil statt z.B. des Typs "READ" ein Typ "Ändere Speicherkonfiguration" angegeben ist.

Zugriffe eines (lokalen oder entfernten) Endgerätes auf den Speicher des Speichermediums sind mit Hilfe der von dem Endgerät gesendeten, also als externe Kommandos in dem Speichermedium empfangenen, Zugriffskommandos möglich. Für die Zugriffe werden also nur die Zugriffskommandos benötigt. Das Konfigurationskommando ist gegenüber den Zugriffskommandos ein weiteres externes Kommando, welches in dem Speichermedium vom Endgerät empfangen werden kann. Das Konfigurationskommando könnte insofern als ein gegenüber den Zugriffskommandos übergeordnetes Kommando betrachtet werden.

Wahlweise ist das Speichermedium zum Verarbeiten von Kommandos eingerichtet, die zumindest einen Argumentteil aufweisen, wobei das Konfigurationskommando teilweise im Datenteil und teilweise im Argumentteil implementiert ist. Als Argumentteil ist wahlweise ein Adressteil vorgesehen. Im Adressteil ist in diesem Fall eine logische Adresse angebbar. Das Konfigurationskommando ist wahlweise dadurch teilweise im Argumentteil implementiert, dass die Angabe eines spezifischen Arguments, z.B. einer spezifischen Adresse, als Befehl zum Aktivieren einer Speicherkonfiguration interpretiert wird. Wahlweise wird ein spezifischer Kommandoteil - z.B. ein vordefiniertes Kommando wie z.B. Lesekommando oder Schreibkommando - in Verbindung mit einem spezifischen Argument, z.B. einer spezifischen Adresse, als Konfigurationskommando verwendet. In diesem Fall wird das vordefinierte Kommando, z.B. Lesen oder Schreiben, auf Grund des spezifischen Arguments, z.B. Adresse, nicht mehr als Lese- bzw. Schreibkommando interpretiert, sondern als das erfindungsgemäße Konfigurationskommando zum Aktivieren einer Speicherkonfiguration. Die Abarbeitung einer spezifischen Adresse erfolgt wahlweise wie in WO 2008/058705 beschrieben.

Erfindungsgemäß ist das Speichermedium zum Verarbeiten von Kommandos eingerichtet, die zumindest einen Datenteil aufweisen, wobei das Konfigurationskommando zumindest teilweise im Datenteil implementiert ist. Der Datenteil weist wahlweise einen Leitinformationsteil (z.B. einen Header) und einen Datenkörperteil (Body) auf, der die eigentlichen Daten enthält, wobei das Konfigurationskommando wahlweise im Leitinformationsteil (Header) oder/und im Datenkörperteil (Body) implementiert ist. Beispielsweise wird, wenn in einem Kommando im Leitinformationsteil (Header) des Datenteils eine spezifische Leitinformation, z.B. ein sogenanntes "magic word" erkannt wird, das Kommando als Konfigurationskommando erkannt und verarbeitet. Die Abarbeitung eines Konfigurationskommandos, das zumindest teilweise in dem Datenteil, insbesondere in der Leitinformation (Header), implementiert ist, erfolgt wahlweise so wie die in WO 2008/058741 beschriebene Abarbeitung einer Leitinformation, insbesondere wahlweise mit abwechselndem Empfangen von Kommandoteilen beim Speichermedium und Senden von Antworten aus dem Speichermedium heraus.

Generell erfolgt wahlweise die Abarbeitung eines Kommandos, das mehrere Teile aufweist, z.B. Kommandotypteil und/oder Argumentteil (Adressteil) und/oder Datenteil, in mehreren Schritten, mit abwechselndem Empfangen von Kommandoteilen beim Speichermedium und Senden von Antworten aus dem Speichermedium heraus, analog wie es beispielsweise in WO 2008/058741 beschrieben ist.

Wahlweise weist das Speichermedium ein besonders gesichertes Zusatzmodul wie das in WO 2008/058741 oder WO 2008/058705 beschriebene auf. Das Zusatzmodul weist wahlweise einen Chipkarten(SmartCard)-IC und/oder besonders gesicherte Teilbereiche eines Speichercontrollers auf. Wahlweise ist das Konfigurationskommando zumindest teilweise in dem Zusatzmodul implementiert.

Wahlweise wird bei einem Konfigurationskommando, das zumindest teilweise mittels einer spezifischen Adresse im Argumentteil implementiert ist, in einem Speichercontroller des Speicherverwaltungssystems die Adresse ausgewertet und als spezifische Adresse erkannt. Daraufhin wird das Konfigurationskommando zur weiteren Abarbeitung an das Zusatzmodul gesendet. Im Zusatzmodul sind Funktionalitäten des Konfigurationskommandos implementiert, die das Aktivieren einer Speicherkonfiguration bewirken. Das Zusatzmodul ist wahlweise besonders gesichert und ermöglicht z.B. das Festlegen besonderer Sicherheits- oder Zugriffsbeschränkungen.

Im Folgenden wird die Erfindung an Hand von Ausführungsbeispielen und unter Bezugnahme auf die Zeichnung näher erläutert, in der zeigen:
- Fig.1: schematisch ein erfindungsgemäßes Speichermedium in Kommunikation mit einem Endgerät, mit Aktivieren einer ersten Speicherkonfiguration mit nachfolgendem Lesen eines Datenblocks;
- Fig. 2: die analoge Konstellation zu Fig. 1 für das Aktivieren einer zweiten Speicherkonfiguration;
- Fig. 3: schematisch den Aufbau eines Kommandos, in das ein erfindungsgemäßes Konfigurationskommando implementiert sein kann;
- Fig. 4: ein Kommando gemäß Fig. 3, bei dem eine spezifische Adresse zur Implementierung eines Konfigurationskommandos verwendet ist;
- Fig. 5: ein Kommando gemäß Fig. 3, bei dem ein herstellerspezifisches Kommando zur Implementierung eines Konfigurationskommandos verwendet ist;
- Fig. 6: ein Kommando gemäß Fig. 3, bei dem eine spezifische Leitinformation oder "magic word" zur Implementierung eines Konfigurationskommandos verwendet ist.

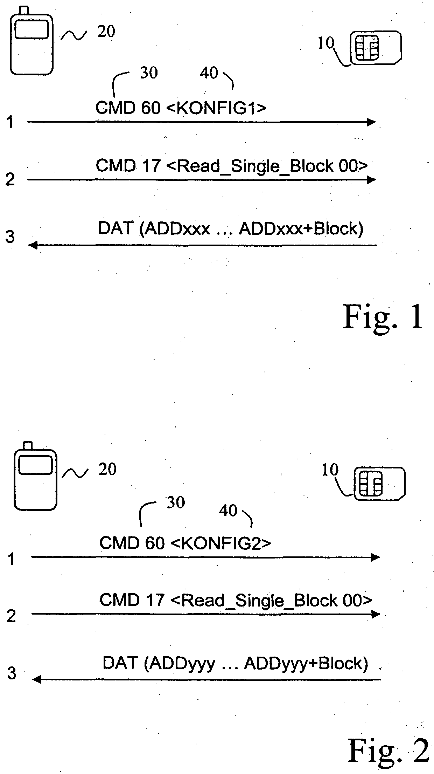

Fig.1 zeigt ein Speichermedium 10 gemäß einer Ausführungsform der Erfindung in Kommunikation mit einem Endgerät 20, in dem das Speichermedium 10 betrieben wird. Der Übersichtlichkeit halber ist das Speichermedium 10 außerhalb des Endgeräts 20 dargestellt. Das Speichermedium 10 und das Endgerät 20 kommunizieren über eine Schnittstelle miteinander. In einem ersten Schritt 1 wird ein Konfigurationskommando 30, für das ein herstellerspezifisches Kommando CMD60 verwendet wird, vom Endgerät 20 an das Speichermedium 10 gesendet. Mit dem Konfigurationskommando 30 wird als Parameter 40 eine Angabe mitgesandt, welche Speicherkonfiguration aktiviert werden soll. In Fig. 1 soll eine erste Speicherkonfiguration KONFIG1 aktiviert werden. Die erste Speicherkonfiguration KONFIG1 wird im Speichermedium 10 aktiviert. In einem zweiten Schritt 2 sendet das Endgerät 20 einen Lesebefehl CMD17 <Read_Single_block> zum Auslesen eines einzelnen Speicherblocks, der bei der logischen Adresse "00" beginnt, an das Speichermedium. In einem dritten Schritt 3 übersetzt das Speichermedium 10 an Hand einer im Speichermedium implementierten Übersetzungs-Tabelle die logische Adresse 00 in eine physikalische Adresse ADD des Speichermediums 10, in Fig. 1 die physikalische Adresse xxx", und sendet den Inhalt DAT der physikalischen Speicheradressen xxx bis xxx +BLOCK, d.h. xxx + Blockgröße, an das Endgerät 20.

Fig. 2 zeigt die analoge Konstellation zu Fig.1 für das Aktivieren einer zweiten Speicherkonfiguration. Im ersten Schritt 1 wird das Konfigurationskommando 30 CMD60 vom Endgerät 20 an das Speichermedium 10 gesandt, parametrisiert mit dem Parameter 40, der angibt, dass die zweite Speicherkonfiguration KONFIG2 aktiviert werden soll. Das Speichermedium 10 aktiviert daraufhin die erste Speicherkonfiguration KONFIG2. In einem zweiten Schritt 2 sendet das Endgerät 20, wie bei Fig. 1, an das Speichermedium einen Lesebefehl CMD17 <Read_Single_Block> zum Auslesen eines einzelnen Speicherblocks, der bei der logischen Adresse "00" beginnt. In einem dritten Schritt 3 übersetzt das Speichermedium 10 an Hand einer im Speichermedium implementierten Übersetzungs-Tabelle die logische Adresse 00 in eine physikalische Adresse des Speichermediums 10. In Fig. 2 ist die übersetzte physikalische Adresse ADD, entsprechend der zweiten Speicherkonfiguration KONFIG2, gleich "yyy". Diese unterscheidet sich von der physikalischen Speicheradresse ADD "xxx" der ersten Speicherkonfiguration KONFIG1.

Das Speichermedium 10 sendet den Inhalt DAT der physikalischen Speicheradressen xxx bis xxx+Block (xxx+Blockgröße) an das Endgerät 20.

Eine Übersetzungstabelle für ein Speichermedium mit drei unterschiedlichen Speicherkonfigurationen KONFIG1, KONFIG2, KONFIG3, kann beispielsweise folgendermaßen gestaltet sein (schematische Darstellung).

**Tabelle 1:**

| Logische Adresse | Phys. Adresse KONFIG1 | Phys. Adresse KONFIG2 | Phys. Adresse KONFIG3 |
|---|---|---|---|
| 00 | 0000 | 0100 | 1000 |
| 01 | 0001 | 0110 | 1001 |
| ... | ... | ... | ... |
| FF | 00FF | 01FF | 10FF |

Bei Tabelle 1 sind die physikalischen Adressen der unterschiedlichen Speicherkonfigurationen gegeneinander um einen festen Offset versetzt.

Bei anderen Ausführungsbeispielen ist nur für einzelne Speicherzellen die Zuordnung zwischen logischer und physikalischer Adresse unterschiedlich (z.B. vertauscht), wie in der folgenden Tabelle 2 veranschaulicht ist.

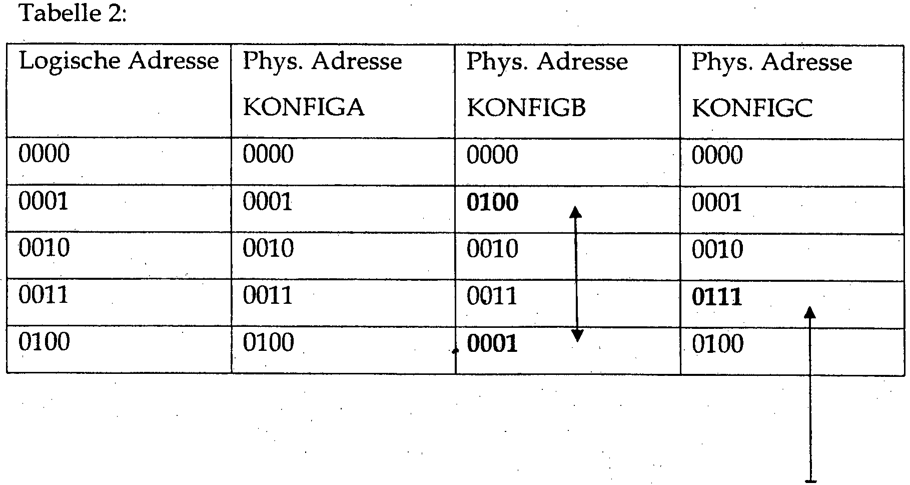

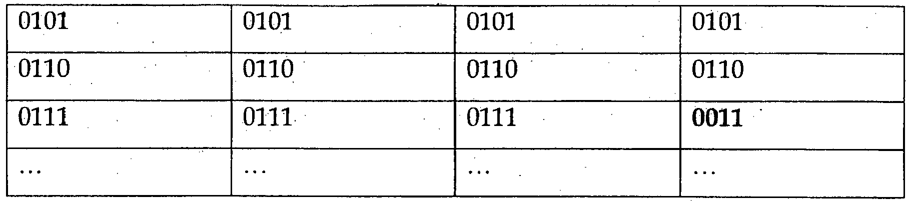

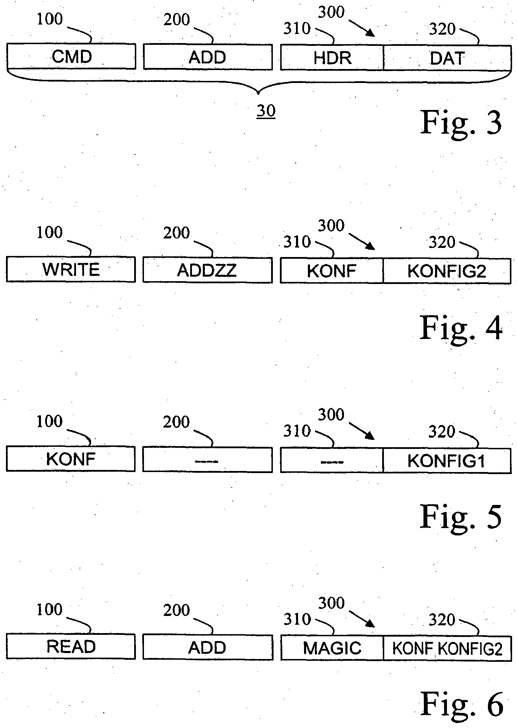

Fig. 3 zeigt schematisch den Aufbau eines Kommandos, in das ein erfindungsgemäßes Konfigurationskommando 30 implementiert sein kann. Das Kommando enthält einen Kommandotypteil CMD 100, einen Argumentteil ADD 200 und einen Datenteil 300. Der Datenteil 300 umfasst einen Leitinformationsteil (Header) HDR 310 und einen Datenkörperteil (Body) DAT 320.

Fig. 4 zeigt ein Kommando gemäß Fig. 3, bei dem eine spezifische Adresse ADDZZ im Argumentteil 200 zur Implementierung eines erfindungsgemäßen Konfigurationskommandos 30 verwendet ist. Genauer ist das Konfigurationskommando 30 aus Fig. 4 aus einem Standardkommando, hier WRITE, im Datentypteil 100, einer spezifischen Adresse ADDZZ im Argumentteil 200, einem Unterkommando KONF im Leitinformationsteil (Header) 310 des Datenteils und einem Parameter KONFIG2 im Datenkörperteil (Body) 320 des Datenteils 300 gebildet. Das Standardkommando WRITE im Kommandotypteil 100 wird anfangs gewöhnlich abgearbeitet. In Reaktion auf die spezifische Adresse ADDZZ im Adressteil 200 wird das Konfigurationskommando 30 zur weiteren Abarbeitung an ein Zusatzmodul gesendet, einen Teilbereich der Speicherverwaltung. Dort ist das Unterkommando KONF zusammen mit dem Parameter KONFIG2 implementiert. Das Zusatzmodul arbeitet das Unterkommando KONF aus dem Header 310 zusammen mit dem Parameter KONFIG2 aus dem Body 320 des Datenteils 300 ab und bewirkt dadurch das Aktivieren der Speicherkonfiguration KONFIG2.

Fig. 5 zeigt ein Kommando gemäß Fig. 3, bei dem ein im Kommandotypteil 100 implementiertes herstellerspezifisches Kommando KONF zur Implementierung eines Konfigurationskommandos 30 verwendet ist. Der Argumentteil 200 und der Leitinformationsteil (Header 310) des Datenteils 300 sind bei dieser Art der Implementierung entbehrlich und können entfallen oder leer bleiben. Im Datenkörperteil (Body) 320 des Datenteils 300 ist der Parameter KONFIG1 enthalten, der die zu aktivierende Speicherkonfiguration angibt.

Fig. 6 zeigt ein Kommando gemäß Fig. 3, bei dem eine im Leitinformationsteil (Header) 310 des Datenteils 300 implementierte spezifische Leitinformation oder "magic word" MAGIC zur Implementierung eines Konfigurationskommandos 30 verwendet ist. Der Kommandotypteil 100 enthält ein Standardkommando, hier das Lesekommando READ, der Argumentteil 200 eine beliebige Adresse ADD. Im Leitinformationsteil (Header) 310 des Datenteils 300 ist die spezifische Leitinformation MAGIC enthalten. Im Datenkörperteil 320 des Datenteils 300 ist ein Unterkommando KONF des Konfigurationskommandos 30 und ein Parameter KONFIG2 enthalten. Das Standardkommando READ im Kommandotypteil 100 wird zu Anfang standardmäßig abzuarbeiten begonnen. In Reaktion auf die spezifische Leitinformation MAGIC im Leitinformationsteil (Header) 320 wird die weitere Abarbeitung des Kommandos an ein Zusatzmodul geleitet, in dem das Unterkommando KONF zusammen mit dem Parameter KONFIG2 implementiert ist. Durch Abarbeitung des Datenkörperteils 320 wird im Zusatzmodul das Unterkommando KONF zusammen mit dem Parameter KONFIG2 ausgeführt und dadurch die Speicherkonfiguration KONFIG2 aktiviert.

Bei den Ausführungsformen aus Fig. 4 und Fig. 6 wird in Reaktion auf die spezifische Adresse ADDZZ bzw. die spezifische Leitinformation MAGIC die weitere Abarbeitung des Konfigurationskommandos 30 an ein Zusatzmodul geleitet, das besonders gesichert sein kann. Dies hat den Vorteil, dass für das Konfigurationskommando 30 und damit für das Aktivieren von Speicherkonfigurationen besondere Sicherheits- oder Zugriffsbeschränkungen festgelegt werden können, wie beispielsweise Authentisierungserfordernisse oder zwingende PIN-Eingaben. Alternativ kann jedoch das Weiterleiten an ein Zusatzmodul entfallen und die weitere Kommandobearbeitung im allgemeinen Teil des Speicherverwaltungssystems durchgeführt werden.

## Patentansprüche

1. Tragbares Speichermedium (10) mit einem Speicherbereich und einem Speicherverwaltungssystem zur Verwaltung des Speicherbereichs, bei dem unterschiedliche Zugriffsmöglichkeiten auf den Speicherbereich vorgesehen sind, wobei das tragbare Speichermedium Kommandos eines Endgerätes als externe Kommandos empfängt und zum Verarbeiten dieser Kommandos, die zumindest einen Datenteil (300) aufweisen, eingerichtet ist, wobei
das Speicherverwaltungssystem ein externes Konfigurationskommando (30) empfängt und in Antwort auf das empfangene Konfigurationskommando (30) ein Aktivieren einer einzelnen von mindestens zwei unterschiedlichen aktivierbaren Speicherkonfigurationen bewirkt, wobei sich die unterschiedlichen Speicherkonfigurationen dadurch unterscheiden, dass, abhängig von der aktivierten Speicherkonfiguration, mindestens ein externes Zugriffskommando (READ, WRITE, OPEN) zum Zugreifen auf den Speicherbereich in einen unterschiedlichen Teilspeicherbereich geleitet wird,
**dadurch gekennzeichnet, dass**
das Konfigurationskommando (30) zumindest teilweise im Datenteil (300) implementiert ist.

2. Das tragbare Speichermedium (10) nach Anspruch 1, wobei mindestens zwei unterschiedliche Teilspeicherbereiche disjunkt sind.

3. Das tragbare Speichermedium (10) nach Anspruch 1 oder 2, wobei das mindestens eine externe Zugriffskommando (READ, WRITE, OPEN) eine Angabe einer logischen Adresse umfasst und das Leiten in einen Teilspeicherbereich ein Übersetzen der logischen Adresse in eine physikalische Adresse des Speicherbereichs umfasst, wobei in Abhängigkeit von der aktivierten Speicherkonfiguration eine, zumindest für eine logische Adresse, für jede Speicherkonfiguration unterschiedliche Übersetzung der logischen Adresse in eine physikalische Adresse durchgeführt wird.

4. Das tragbare Speichermedium nach Anspruch 3, das mindestens eine Übersetzungs-Tabelle zur Übersetzung von logischen Adressen in physikalische Adressen gemäß den aktivierbaren Speicherkonfigurationen aufweist.

5. Das tragbare Speichermedium (10) nach einem der Ansprüche 1 bis 4, wobei mindestens eine der unterschiedlichen Speicherkonfigurationen einen Schreibschutz für zumindest einen Unterbereich des Speicherbereichs umfasst.

6. Das tragbare Speichermedium (10) nach einem der Ansprüche 1 bis 5, wobei die Kommandos ferner zumindest einen Kommandotypteil (100) aufweisen, wobei das Konfigurationskommando (30) teilweise im Datenteil (300) und teilweise im Kommandotypteil (100) implementiert ist.

7. Das tragbare Speichermedium (10) nach einem der Ansprüche 1 bis 6, wobei die Kommando ferner zumindest einen Argumentteil (200) aufweisen, wobei das Konfigurationskommando (30) teilweise im Datenteil (300) und teilweise im Argumentteil (200) implementiert ist.

8. Das tragbare Speichermedium (10) nach einem der Ansprüche 1 bis 5, wobei der Datenteil (300) einen Leitinformationsteil (310) und einen Datenkörperteil (320) aufweist, und das Konfigurationskommando (30) im Leitinformationsteil (310) implementiert ist.

9. Das tragbare Speichermedium (10) nach einem der Ansprüche 1 bis 5, wobei der Datenteil (300) einen Leitinformationsteil (310) und einen Datenkörperteil (320) aufweist, und das Konfigurationskommando (30) im Leitinformationsteil (310) und im Datenkörperteil (320) implementiert ist.

10. Das tragbare Speichermedium (10) nach Anspruch 9, wobei das Kommando als Konfigurationskommando (30) erkannt wird, wenn im Leitinformationsteil (310) eine spezifische Leitinformation enthalten ist.

11. Das tragbare Speichermedium (10) nach einem der Ansprüche 1 bis 5, wobei der Datenteil (300) einen Leitinformationsteil (310) und einen Datenkörperteil (320) aufweist, und das Konfigurationskommando (30) im Datenkörperteil (320) implementiert ist.

12. Das tragbare Speichermedium (10) nach einem der Ansprüche 1 bis 11, wobei das Speicherverwaltungssystem ein Zusatzmodul aufweist, wobei das Konfigurationskommando (30) zumindest teilweise im Zusatzmodul implementiert ist.

13. Das tragbare Speichermedium (10) nach einem der Ansprüche 1 bis 12 wobei das mindestens eine externe Zugriffskommando vor dem Aktivieren der ersten der Speicherkonfigurationen in einen ersten Teilspeicherbereich geleitet wird und nach dem Aktivieren der ersten der Speicherkonfigurationen in einen zweiten Teilspeicherbereich geleitet wird.

## Claims

1. Portable memory medium (10) having a memory area and a memory management system for managing the memory area, wherein different options for accessing the memory area are provided, wherein the portable memory medium receives commands of a terminal device as external commands and is adapted for processing these commands, which comprise at least a data part (300), wherein
the memory management system receives an external configuration command (30) and causes, in response to the received configuration command (30), an activation of one of at least two different activatable memory configurations, wherein the different memory configurations differ in that, depending on the activated memory configuration, at least one external access command (READ, WRITE, OPEN) for accessing the memory area is transmitted into a different partial memory area
**characterized in that**
the configuration command (30) is at least partially implemented in the data part (300).

2. The portable memory medium (10) according to claim 1, wherein at least two different partial memory areas are disjoint.

3. The portable memory medium (10) according to claim 1 or 2, wherein the at least one external access command (READ, WRITE, OPEN) comprises a specification of a logical address, and the transmission into a partial memory area comprises a translation of the logical address into a physical address of the memory area, wherein, depending on the activated memory configuration, a translation of the logical address into a physical address is carried out that, at least for one logical address, is different for each memory configuration.

4. The portable memory medium according to claim 3, comprising at least one translation table for translating logical addresses into physical addresses according to the activatable memory configurations.

5. The portable memory medium (10) according to any one of claims 1 to 4, wherein at least one of the different memory configurations comprises a write protection for at least a sub-area of the memory area.

6. The portable memory medium (10) according to any one of claims 1 to 5, wherein the commands further comprise at least one command type part (100), the configuration command (30) being implemented partially in the data part (300) and partially in the command type part (100).

7. The portable memory medium (10) according to any one of claims 1 to 6, wherein the commands further comprise at least one argument part (200), the configuration command (30) being implemented partially in the data part (300) and partially in the argument part (200).

8. The portable memory medium (10) according to any one of claims 1 to 5, wherein the data part (300) comprises a routing information part (310) and a data body part (320), and the configuration command (30) is implemented in the routing information part (310).

9. The portable memory medium (10) according to any one of claims 1 to 5, wherein the data part (300) comprises a routing information part (310) and a data body part (320), and the configuration command (30) is implemented in the routing information part (310) and in the data body part (320).

10. The portable memory medium (10) according to claim 9, wherein the command is identified as a configuration command (30) if specific routing information is contained in the routing information part (310).

11. The portable memory medium (10) according to any one of claims 1 to 5, wherein the data part (300) comprises a routing information part (310) and a data body part (320), and the configuration command (30) is implemented in the data body part (320).

12. The portable memory medium (10) according to any one of claims 1 to 11, wherein the memory management system comprises an auxiliary module, the configuration command (30) being at least partially implemented in the auxiliary module.

13. The portable memory medium (10) according to any one of claims 1 to 12, wherein the at least one external access command is transmitted into a first partial memory area prior to the activation of the first of the memory configurations, and is transmitted into a second partial memory area after the activation of the first of the memory configurations.

## Revendications

1. Support portable de mémoire (10) comportant une zone de mémoire et un système de gestion de mémoire pour la gestion de la zone de mémoire, dans lequel différentes possibilités d'accès à la zone de mémoire sont prévues, le support portable de mémoire recevant des commandes d'un dispositif terminal en tant que commandes externes et étant configuré pour le traitement de ces commandes qui comprennent au moins une partie de données (300),
le système de gestion de mémoire recevant une commande de configuration externe (30) et provoquant, en réponse à la commande de configuration (30) reçue, une activation de l'une d'au moins deux configurations de mémoire activables différentes, les configurations de mémoire différentes différant par le fait qu'en fonction de la configuration de mémoire activée, au moins une commande d'accès externe (READ, WRITE, OPEN) pour l'accès à la zone de mémoire est transmise dans une zone de mémoire partielle différente,
**caractérisé par le fait que**
la commande de configuration (30) est au moins partiellement implémentée dans la partie de données (300).

2. Support portable de mémoire (10) selon la revendication 1, dans lequel au moins deux zones de mémoire partielle différentes sont disjointes.

3. Support portable de mémoire (10) selon l'une des revendications 1 ou 2, dans lequel la au moins une commande d'accès externe (READ, WRITE, OPEN) comprend une spécification d'une adresse logique et la transmission dans une zone de mémoire partielle comprend une traduction de l'adresse logique en une adresse physique de la zone de mémoire, où, en fonction de la configuration de mémoire activée, une traduction de l'adresse logique en une adresse physique est effectuée, qui, au moins pour une adresse logique, est différente pour chaque configuration de mémoire.

4. Support portable de mémoire (10) selon la revendication 3, qui présente au moins une table de traduction pour la traduction d'adresses logiques en adresses physiques selon les configurations de mémoire activables.

5. Support portable de mémoire (10) selon l'une des revendications 1 à 4, dans lequel au moins l'une des configurations de mémoire différentes comprend une protection en écriture pour au moins une sous-zone de la zone de mémoire.

6. Support portable de mémoire (10) selon l'une des revendications 1 à 5, dans lequel les commandes présentent en outre au moins une partie de type de commande (100), la commande de configuration (30) étant implémentée en partie dans la partie de données (300) et en partie dans la partie de type de commande (100).

7. Support portable de mémoire (10) selon l'une des revendications 1 à 6, dans lequel les commandes présentent en outre au moins une partie d'argument (200), la commande de configuration (30) étant implémentée en partie dans la partie de données (300) et en partie dans la partie d'argument (200).

8. Support portable de mémoire (10) selon l'une des revendications 1 à 5, dans lequel la partie de données (300) présente une partie d'informations de routage (310) et une partie de corps de données (320), et la commande de configuration (30) est implémentée dans la partie d'informations de routage (310).

9. Support portable de mémoire (10) selon l'une des revendications 1 à 5, dans lequel la partie de données (300) présente une partie d'informations de routage (310) et une partie de corps de données (320), et la commande de configuration (30) est implémentée dans la partie d'informations de routage (310) et dans la partie de corps de données (320).

10. Support portable de mémoire (10) selon la revendication 9, dans lequel la commande est reconnue en tant que commande de configuration (30), lorsqu'une information de routage spécifique est contenue dans la partie d'informations de routage (310).

11. Support portable de mémoire (10) selon l'une des revendications 1 à 5, dans lequel la partie de données (300) présente une partie d'informations de routage (310) et une partie de corps de données (320), et la commande de configuration (30) est implémentée dans la partie de corps de données (320).

12. Support portable de mémoire (10) selon l'une des revendications 1 à 11, dans lequel le système de gestion de mémoire présente un module additionnel, la commande de configuration (30) étant implémentée au moins partiellement dans le module additionnel.

13. Support portable de mémoire (10) selon l'une des revendications 1 à 12, dans lequel l'au moins une commande d'accès externe est transmise dans une première zone de mémoire partielle avant l'activation de la première des configurations de mémoire et est transmise dans une seconde zone de mémoire partielle après l'activation de la première des configurations de mémoire.
